# EUROPEAN PATENT APPLICATION

(11) **EP 2 629 246 A2**
(43) Date of publication of application: **21.08.2013**
(21) Application number: 13155524.5
(22) Date of filing: 15.02.2013
(51) Int. Cl.: G06K 19/06

(54) **Datamatrix code arrangement including a display and method for manufacturing the same**

(30) Priority: 16.02.2012 US 201261599615 P; 16.02.2012 EP 12155847; 29.06.2012 EP 12174427
(71) Applicant: Acreo Swedish ICT AB, 164 40 Kista (SE)
(72) Inventor: Nordlinder, Staffan, 603 65 Norrköping (SE)
(74) Representative: Lind, Urban Arvid Oskar

(57) **Abstract**

A data matrix code arrangement (200), and a method for making the same, said data matrix code arrangement (200) comprising a fix data matrix code (210) comprising a static pattern forming a first readable Data Matrix code, and an electrochemically switchable organic electrochromic display comprising pixel element comprising control means arranged for enabling an application of a predetermined potential difference between an electrochromic layer (221) and a counter electrode layer (222) of said pixel element. The application of a potential difference initiates and maintains a colour switch of said predetermined ones of said pixel elements.
Said fix Data Matrix code (210) and said display (220) are aligned such that the static pattern of said first Data Matrix code and said predetermined ones of said pixel elements, when switched, forms a second readable Data Matrix code, which is different from said first readable Data Matrix code.

## Description

### Technical field of the Invention

The invention relates to Data Matrix codes, such as QR codes, HD barcodes and MaxiCodes.

### Background of the Invention

A Data Matrix code is a two-dimensional matrix barcode consisting usually of black and white "cells" or modules arranged in either a square or rectangular pattern. The information to be encoded can be text or raw data. Usual data size is from a few bytes up to more than 1 kilobytes, e.g. QR codes may have a data size of up to 1556 bytes. Details about the Data Matrix bar code symbology may e.g. be found in ISO/IEC 16022:2006.

One example of a Data Matrix code is the QR code. A QR code is a two-dimensional bar code that can embed a variety of data such as contact info, website address or directions to a location. "QR" stands for "Quick Response", as the code can be scanned and decoded at high speed. When a mobile phone camera scans a QR code using a QR code reader, it shows that embedded data on the phone. QR codes are very efficient and make use of the vertical dimension to store more data. QR codes originates from Japan, where they are very popular. They can be used in print advertisements, billboards, maps, business cards, product tags etc. QR codes are now gaining attraction in US and elsewhere.

QR codes are normally dynamic - meaning you can change any information on the QR code at any time without changing the code itself.

For example:
- If your phone number changes, you can update that information without changing the QR code already printed on your business card.
- If you want to change the website link on your QR code that is printed in your advertisement, you can do it easily without changing the QR Code.

In other words, the idea behind QR codes is that you update the information by letting the QR code link to a web site, which will respond to the reader by returning some preprogrammed information. The information provided when reading the QR code may therefore easily be changed by changing the information on website.

### Summary of the Invention

The inventors have found a new way of updating Data Matrix codes, which is a significant improvement to the teaching in this technical field.

According to a first aspect thereof, the invention relates to a Data Matrix code arrangement comprising:
- a fix Data Matrix code comprising a static pattern forming a first readable Data Matrix code;
- a display comprising pixel elements, wherein each pixel element comprises:
   - an electrochromic layer, preferably comprising electrically conductive and electrochemically active organic polymer material, e.g. an EDOT based polymer such as PEDOT:PSS, the electrochromic layer being switchable between at least two different coloring states;
   - a counter electrode layer comprising electronic conductive material;
   - an electrolyte layer, which ionically connects said electrochromic layer and said counter electrode layer;
- control means arranged for applying a predetermined potential difference, or enabling application of a predetermined potential difference, between the electrochromic layer and the counter electrode layer of predetermined ones of said pixel elements, so as to cause a colour switch of these pixel elements; wherein said fix Data Matrix code and said display are aligned such that the static pattern of said first Data Matrix code and said predetermined ones of said pixel elements, when switched, forms a second readable Data Matrix code, which is different from said first readable Data Matrix code.

According to a second aspect thereof, the invention relates to a method of printing a Data Matrix code arrangement comprising performing the following steps in an arbitrary order or in any suitable order:
- printing a display, comprising pixel elements:
   - for each pixel element:
      - printing a counter electrode layer on a substrate wherein said counter electrode layer comprises electronically conductive material;
      - printing an electrolyte layer on said counter electrode;
      - printing an electrochromic layer on said electrolyte layer, wherein said electrochromic layer is switchable between at least two different coloring states, the electrochromic layer preferably comprising an electrically conductive and electrochemically active organic polymer material, e.g. an EDOT based polymer such as PEDOT:PSS; and
         wherein said electrolyte layer ionically connects said electrochromic layer to said counter electrode layer;
   - providing control means arranged for applying a predetermined potential difference across predetermined ones of said pixel elements;
- printing a fix Data Matrix code comprising a static pattern forming a first readable Data Matrix code,
- aligning said fix Data Matrix code and the display such that the static pattern of said first Data Matrix code and said predetermined ones of said pixel elements, when switched, forms a second readable Data Matrix code, which is different from said first readable Data Matrix code.

That the steps above may be preformed in an arbitrary order or in any suitable order, means e.g. that the display may be completed before the fix Data Matrix code, or vice versa; or that the first layers of the display is printed, whereafter the fix Data Matrix code is printed, whereafter the display is completed. That the steps above may be preformed in an arbitrary order or in any suitable order, also means that the layers of the display may be printed in any suitable order, e.g. the electrochromic layer may be printed before the counter electrode layer, and vice versa.

The fix Data Matrix code comprising a static pattern forming a first readable Data Matrix should, in the context of the present application, be understood as *static* compared to the predetermined ones of said pixel elements forming a part of the second readable Data Matrix code formed by the display. That is, in the context of the present application the terms *static* and *static pattern* are used as a relative term in relation to the predetermined ones of said pixel elements forming a part of the second readable Data Matrix cod, and not as absolute properties. Hence, the fix Data Matrix code comprising the static pattern may also be formed at least partly by a display, being a second display, similar, or equal to, the display forming the predetermined ones of said pixel elements forming a part of the second readable Data Matrix code, the only difference being the pattern of the Data Matrix codes. Thus, parts of the fix Data Matrix code do not need to be visible from start since the second display at least partly comprising the fix Data Matrix code comprising the static pattern may be in its off state. One of the displays may then be turned on, thus forming a first Data Matrix code, i.e. at least parts of the fix Data Matrix code, thereafter the other of the displays may be turned on, thus forming the predetermined ones of said pixel elements forming a part of the second readable Data Matrix code. Hence the static pattern of the first Data Matrix code is static when compared to predetermined ones of said pixel elements forming a part of the second readable Data Matrix code. According to at least one embodiment, and in order to facilitate the readability of the text, throughout the application the term "display" is mainly used for the display forming the predetermined ones of said pixel elements forming a part of the second readable Data Matrix code, and the fix Data Matrix code comprising the static pattern is mainly assumed to at least partly comprise printed segments.

One advantage related to the above described aspects, is that as long as the display is in its in-active state and only the fix Data Matrix codes is visible, the Data Matrix code arrangement does not need to be powered. Another advantage related to the above described aspects, is that the message of the Data Matrix code can be changed e.g. in response to local parameters sensed at the location of the Data Matrix code. A third advantage is that the Data Matrix code arrangement may be manufactured by means of high volume manufacturing at low costs.

It should be understood that the static pattern may comprise printed segments, e.g. to be interpreted/read as digit "1" in the fix Data Matrix code (the code being e.g. a binary code), and a second segment, e.g. to be interpreted/read as digit "0" in the code. The second segment may comprise printed segments and/or any other part of the data matrix code arrangement, such as e.g. parts of the electrochromic layer (when the display forming the predetermined ones of said pixel elements forming a part of the second readable Data Matrix code is in its off-state), parts of the counter electrode layer, parts of the electrolyte layer, parts of an insulating layer and/or parts of the substrate.

These and other advantages are met by the subject matters provided in the independent claims. Preferred embodiments of the invention are presented in the independent claims.

Despite the fact that there are very few (if any) Data Matrix code pairs which may be switched between, only by turning on more pixels in one of the codes, the switch between the two codes according to the invention is preferably performed only by turning on more pixels in one of the codes. How this is possible will be explained in more detail below. However, the fix Data Matrix code comprising the static pattern may be readable when pixels are turned off by turning of the display comprising the pixel elements forming a part of the second readable Data Matrix code.

According to one embodiment the electrochromic layer comprises electrically conductive and electrochemically active material. According to one embodiment the electrochromic layer comprises electrically conductive and electrochemically active organic polymer material, preferably an EDOT based polymer e.g. PEDOT:PSS. Alternatively, the material comprises polynailine (PANI).

According to one embodiment, said electrochromic layer acts as an electric conductor when being in ionic contact with the electrolyte layer and when the electrolyte layer is in ionic contact with the counter electrode layer. Hereby, the number of components in the display is reduced since no other electronic conductors are needed other then the electrochromic layer and the counter electrode layer. For example, each one of the pixel elements may be free of any electronic conductors arranged in front of the electrochromic layer, as seen in a viewing direction and/or each one of the pixel elements may be free of any electronic conductors arranged behind the counter electrode layer as seen in a viewing direction. It should be noted that the electrochromic layer may comprises electrically conductive and electrochemically material which may be electronically conducting, i.e. act as an electronic conductor, regardless of the state, e.g. redox state, of said material.

According to one embodiment said predetermined ones of said pixel elements are defined/outlined by openings in an insulating layer, which in a viewing direction may be arranged in front of said electrochromic layer, or which may be arranged between said electrochromic layer and said counter electrode layer. Moreover, according to one embodiment said predetermined ones of said pixel elements forms a portion of a Data Matrix code.

According to one embodiment said fix Data Matrix code is arranged on a transparent substrate, which in a viewing direction is arranged in front of said display. According to an alternative embodiment, said fix Data Matrix code is printed directly on the display.

According to yet an alternative embodiment said fix Data Matrix code and said display is arranged substantially in the same plane. In other words, the fix Data Matrix code and the display are printed directly on the same substrate - or the fix Data Matrix code is printed on an insulating layer of the display.

According to one embodiment the display is a vertical display, i.e. the electrolyte layer is sandwiched between said counter electrode layer and said electrochromic layer. According to an alternative embodiment the display is a lateral display, i.e. the faces of the counter electrode layer and said electrochromic layer which are covered by electrolyte both faces in the same direction, and the counter electrode layer are preferably arranged to the side of and adjacent to said electrochromic layer.

According to one embodiment the step of printing said display is completed before the printing of said fix Data Matrix-code. According to an alternative embodiment the step of printing said fix Data Matrix-code is completed before the printing of said display, or said step of printing said fix Data Matrix-code is performed as an intermediate step in the printing of said display.

According to one embodiment the aligning said fix Data Matrix code and the display is performed at the printing of Data Matrix code on top of, or to the side of, said finished display.

EP 2 312 386 gives a detailed explanation of the properties governing the switching time or the colour change of the pixels, which may be applied to the displays described herein as well as other electrochemically active displays.

According to one embodiment, the display of the Data Matrix code arrangement may be arranged as described in e.g. EP 2 312 386. When such a display is used, having pixel elements arranged in a matrix configuration, wherein not all but only predetermined ones of the pixel elements are to be switched, there is a need for control means in order to be able to selectively address the pixel elements that are to be switched.

According to one embodiment said control means comprises: wiring and control logic arranged to address the predetermined once of said pixel elements.

Optionally, said Data Matrix code arrangement may also comprise a power source, such as a battery, fuel cell, mains electricity, solar cell, resonant circuit arranged to receive an EM field etc, for powering the display - i.e. applying a first potential to said counter electrode layer and a second potential to said electrochromic layer, wherein the difference between said first and second potentials is sufficiently to initiate and maintain an electrochemical reaction of said electrochromic layer.

According to one embodiment the said Data Matrix code arrangement comprises means for receiving e.g. a battery.

According to one embodiment both the electrochromic layer and the electrolyte layer is continuous, whereas the counter electrode layer is segmented, i.e. there is one counter electrode segment for each pixel element of the display. In more detail, the display described in relation to said first aspect further comprises an insulating layer comprising one passage for each of said predetermined ones of said pixel elements, each passage being arranged with an electronic conductor, which electronic conductors is arranged in direct electronic contact with a respective counter electrodes of said predetermined ones of said pixel elements;
- wherein the electrode layer of each pixel element of said predetermined ones of said pixel elements is electronically separated from each other,
- wherein the display further preferably comprises a continuous layer of electrolyte, and the electrolyte layers of said predetermined ones of said pixel elements each is a respective portion of said continuous layer of electrolyte; and
- wherein the display further preferably comprises a continuous layer of electrochromic material, and the electrochromic layers of said predetermined ones of said pixel elements each is a respective portion of said continuous layer of electrochromic material.

According to one embodiment the display is a passive display, wherein the counter electrode layer and the electrochromic layer forms crossing electrodes, and the electrolyte layer is segmented, i.e. there is one electrolyte segment for each pixel element of the display.

In more detail, the display described in relation to said first aspect above is arranged such that the electrolyte layer of each pixel element of said predetermined ones of said pixel elements is ionically separated from each other,
- wherein the display further comprises a parallel lines of electronic conductive material, and the counter electrode layers of said predetermined ones of said pixel elements each is a respective portion of said parallel lines of electronic conductive material;
- wherein the display further comprises a parallel lines of electrochromic material, and the electrochromic layers of said predetermined ones of said pixel elements each is a respective portion of said parallel lines of electrochromic material; and
- wherein each parallel line of said electrode layer intersects each parallel line of said electrochromic layer at only one intersection and
   each of said pixel element is arranged at a respective one of said intersections.

According to a similar aspect, the invention relates to a QR code arrangement comprising:
- a fix QR code comprising a static pattern forming a first readable QR code;
- a display comprising pixel elements, wherein each pixel element comprises:
   - an electrochromic layer preferably comprising electrically conductive and electrochemically active organic polymer material e.g. an EDOT based polymer such as PEDOT:PSS, said electrochromic layer being switchable between at least two different coloring states;
   - a counter electrode layer comprising electronic conductive material;
   - an electrolyte layer, which ionically connects said electrochromic layer and said counter electrode layer;
   - control means arranged for applying a predetermined potential difference between the electrochromic layer and the counter electrode layer of predetermined ones of said pixel elements, so as to cause a colour switch of these pixel elements;
wherein said fix QR code and said display are aligned such that the static pattern of said first QR code and said predetermined ones of said pixel elements, when switched, forms a second readable QR code, which is different from said first readable QR code.

According to one embodiment of said second aspect, said step of printing said electrode layer comprises performing the following steps in an arbitrary order:
- providing an insulating layer comprising one passage for each of said predetermined ones of said pixel elements,
- printing a conductor in said passages of said insulating layer;
- printing said conductors and the counter electrodes of said predetermined ones of said pixel elements in electronic contact with each other; and
- printing the electrode layer of each pixel element electronically separated from each other,
wherein said step of printing the electrolyte layer optionally comprises printing the electrolyte layers of said predetermined ones of said pixel elements as one continuous layer; and
wherein said step of printing the electrochromic layer optionally comprises printing the electrochromic layers of said predetermined ones of said pixel elements as one continuous layer.

According to one embodiment the printing steps mentioned above are performed by means of low-cost printing.

According to an alternative embodiment of said second aspect, said step of printing said electrode layer comprises printing parallel lines, which extend in a first direction, wherein each of said lines electronically connects a respective portion of the electrolyte layers of said predetermined ones of said pixel elements,
- said step of low-cost printing the electrolyte layer comprises printing the electrolyte layers of said predetermined ones of said pixel elements such that they are ionically isolated from each other,
- said step of low-cost printing said electrochromic layer comprises printing parallel lines, which extend in a second direction, wherein each of said lines electronically connects a respective portion of the electrochromic layers of said predetermined ones of said pixel elements,
wherein each parallel line of said electrode layer intersects each parallel line of said electrochromic layer at only one intersection and each of said pixel element is arranged at a respective one of said intersections.

According to one embodiment of the invention, said Data Matrix arrangement further comprises at least one sensor, which is arranged to register a difference in ambient conditions, and to provide data describing the registered difference to the control means of said Data Matrix arrangement. The control means is arranged to receive said data describing the registered difference, and to determine whether the registered difference should be acted on by turning on the display, i.e. by providing a potential difference between the counter electrode layer and the electrochromic layer. The sensor and control means may also be arranged such that the control means always turns on the display when a signal is received from the sensor.

The sensor may for example react on a change in e.g. temperature, humidity, pressure, tension, PH, gas concentration, biomedical status or IR-radiation such that a registered value above or below a predetermined limit makes the sensor send a signal to the control means. The sensor may also send data corresponding to e.g. the current temperature at regular interval to the control logic.

The sensor may also react on pressure, such that it sends a signal to the control means once the sensor is being pressed. The sensor may also be a timer, which sends a signal to the control means once a predetermined time has expired.

The means for activating the display may be passive, such as a battery which is initially frozen, and which only powers the control means after it has defrosted.

The means for activating the display may be manual, such as a switch which is switched or pressed by hand.

Arranging the Dynamic Matrix code with a sensor is advantageous, as it enables for a simplified tracking of which ambient parameter an article has been exposed to. Personnel may easily scan the code with readily available readers, and the code may give one message if the registered ambient parameters have all been within predetermined limits, and another message if one or more of the registered ambient parameters have been out of the predetermined limits.

According to one embodiment, the sensor may be printable, i.e. the sensor may be arranged on a substrate which is passed through the same type of printing machine which prints the display of the Dynamic Matrix code. According to one embodiment, at least one of the wiring and control logic, the power source and the sensor is printable.

According to at least one embodiment, the control means comprises wiring and control logic arranged to address the predetermined once of said pixel elements, and the data matrix code arrangement further comprises:
- a power source, preferably a battery or an EM field, for supplying a voltage difference across said pixel elements; and
- a sensor arranged to register a difference in ambient conditions, and to provide data describing the registered difference to the control means. According to at least one embodiment at least one of the wiring, control logic, the power source and the sensor is printable.

The control means may be passively arranged such that it just enables a flow of electrons pass between a power source and the display. In these embodiments the control means typically comprises wiring, but no logic circuit. In other words, for these embodiments the control means enables an application of a predetermined potential difference between the electrochromic layer and the counter electrode layer of predetermined ones of said pixel elements, by means of wiring but without involving any logic circuit.

Alternatively, the control means may be actively arranged such that it actively controls the flow of electrons between the power source and the display. In these embodiments the control means typically comprises both wiring and logic circuits, which logic circuit determines which pixels that are to be addressed. In other words, for these embodiments the control means enables an application of a predetermined potential difference between the electrochromic layer and the counter electrode layer of predetermined ones of said pixel elements, by means of wiring and logic circuits. The logic circuit may be any logic circuit from diode logic to processors. According to one embodiment the logic circuit is manufactured by means of low-cost printing.

The Data Matrix code arrangement may comprise more than one display, each display being arranged to display different QR-codes, wherein the control means is arranged to determine which QR-codes that are to be displayed, based on e.g. readings from different sensors.

The Data Matrix code arrangement may comprise more than one display, each display being arranged to display different Data Matrix codes, wherein the control means is arranged to determine which Data Matrix codes that are to be displayed, based on e.g. readings from different sensors. For example, the fix Data Matrix code comprising the static pattern may at least partly be formed by a display. The display forming the fix Data Matrix code may be similar, or equal to, the display forming the predetermined ones of said pixel elements forming a part of the second readable Data Matrix code, the only difference between the displays being the pattern of the Data Matrix codes. According to one embodiment, fix Data Matrix code comprising the static pattern may at least partly be formed by more than one display. According to one embodiment, more than one display may form the predetermined ones of said pixel elements forming a part of the second readable Data Matrix code.

According to one example the fix QR code is dispensed with. In other words the Data Matrix code arrangement is a self-supporting Data Matrix code arrangement comprising:
- a self-supporting substrate comprising paper and/or plastic;
- control means arranged on said self-supporting substrate;
- at least one sensor arranged on said self-supporting substrate, which sensor is arranged to register a difference in ambient conditions, and to provide sensor data to said control means; and
- a display comprising pixel elements, wherein each pixel element comprises:
   - an electrochromic layer preferably comprising electrically conductive and electrochemically active organic polymer material e.g. an EDOT based polymer such as PEDOT:PSS, said electrochromic layer being switchable between at least two different coloring states;
   - a counter electrode layer comprising electronic conductive material;
   - an electrolyte layer, which ionically connects said electrochromic layer and said counter electrode layer;
wherein said control means is arranged to control the application of a potential difference between said electrochromic layer and said counter electrode layer of selected pixels elements of said display in response to said sensor data received from said sensor, which potential difference causes a colour change of the electro chromic layer of said selected pixel elements.

Furthermore, the display may be arranged as described in e.g. EP 2 312 386 and the segments of the fix Data Matrix pattern may be printed e.g. on the top substrate, or the electrochromic electrodes. When such a display is used, active control means are preferably provided, such that the logic circuit of the control means may determine which pixels to switch. According to one embodiment, the substrate may be arranged between the segments forming a part of the fix Data Matrix code and the display comprising pixel elements. According to one embodiment, the substrate may be arranged between any layer in the Data Matrix code arrangement.

Alternatively or additionally, other displays than the electrochromic displays based on organic polymer material, as described above, may be used. Examples of such displays are electrochromic displays made of inorganic materials, such as viologenes, polyoxotungstates, zinc oxide and/or tungsten oxide. Other examples are electrophoretic displays, such as e-ink or Si-Pix, or LEC or electro luminescent displays.

According to one example the data matrix code arrangement comprises:
- a fix data matrix code comprising a static pattern forming a first readable Data Matrix code;
- an electrochromic display or an electrophoretic display comprising pixel elements:
- control means arranged for enabling an application of a predetermined potential difference to predetermined ones of said pixel elements, which potential difference initiates and maintains a colour switch of said predetermined ones of said pixel elements;
- wherein said fix Data Matrix code and said display are aligned such that the static pattern of said first Data Matrix code and said predetermined ones of said pixel elements, when switched, forms a second readable Data Matrix code, which is different from said first readable Data Matrix code.

According to one example the Data Matrix code arrangement arranged on a self-supporting substrate may comprise an additional display, corresponding to the fix Data Matrix code described above. This Data Matrix code arrangement may have a first state wherein it is switched off, a second state wherein the additional display is turned on and displays a first QR code or any other type of first Data Matrix code, and a third state wherein both the display and the additional display is turned on and together displays a second QR code or any other type of second Data Matrix code. In other words, the control means determine which Data Matrix code that is to be displayed, and may change the code displayed upon data received from said sensor. Consequently, the display is in its on state independent of which code that is to be displayed. More explicitly, this Data Matrix code arrangement may comprise any of the components described above, such as different power sources, logic circuits etc.

According to one example, all components arranged on the self-supporting substrate of the Data Matrix code arrangements is printable by means of low-cost printing.

### DEFINITIONS

As used herein the term **Data Matrix code** (or perfect Data Matrix code) refers to a code which is a two-dimensional matrix code consisting usually of black and white "cells" or modules arranged in either a square or rectangular pattern. The information to be encoded can be text or raw data. Details about the Data Matrix bar code symbology may e.g. be found in ISO/IEC 16022:2006. The Data Matrix code may e.g. be arranged such that it fulfils the ISO/IEC16022 standard. Examples of Data Matrix codes are Array3-DI, ArrayTag, Aztec Code, Small Aztec Code, Codablock, Code 1, Code 16K, Code 49, ColorCode, Color Construct Code, Compact Matrix Code, CP Code, CyberCode, d-touch, DataGlyphs, Data Matrix, Datastrip Code, Dot Code A, EZcode, Grid Matrix Code, HD Barcode, High Capacity Color Barcode, HueCode, INTACTA.CODE, InterCode, JAGTAG, MaxiCode, mCode, MiniCode, MicroPDF417, MMCC, Nintendo e-Reader#Dot code, Optar, PaperDisk, PDF417, PDMark, QR Code, QuickMark Code, Secure Seal, SmartCode, Snowflake Code, ShotCode, SPARQCode, SuperCode, Trillcode, UltraCode, UnisCode, VeriCode, VSCode, WaterCodeTag.

As used herein the term **readable Data Matrix code** refers to a Data Matrix code, which is optically readable. The code may e,g, fulfill the ISO/IEC 16022 standard to such an extent, that it may be interpreted by a reader which works according to the ISO/IEC16022 standard. In other words, the readable Data Matrix code may not be a perfect Data Matrix code, but may comprise some errors which are restored by the error correction algorithm.

As used herein the term **QR code** (or perfect QR code) refers to a code which is arranged such that it fulfils the ISO/IEC18004 standard. In other words, the code may consists of black modules arranged in a square pattern on a white background. The information encoded can be made up of four standardized modes of data (numeric, alphanumeric, byte/binary, Kanji), or by supported extensions.

As used herein the term **readable QR code** refers to a code which fullfils the ISO/IEC18004 standard to such an extent, that it may be interpreted by a reader which works according to the ISO/IEC18004 standard. In other words, the readable QR code may not be a perfect QR code, but may comprise some errors which are restored by the error correction algorithm.

The reader of the Data Matrix or the QR code is normally arranged such that the colors of the light and dark fields are of less importance, as long as the light and dark fields are discernable from each other.

As used herein the term **static pattern** refers to pixels or segments that remains the same independent of whether the display of the second Data Matrix code arrangement is in its on or off state. However, as mentioned previously, the static pattern of the fix Data Matrix code should, in the context of the present application, be understood as static compared to the predetermined ones of said pixel elements forming a part of the second readable Data Matrix code formed by the display. Hence, the static pattern may form a fix Data Matrix code which is formed at least partly by a display, being a second display, similar, or equal to, the display forming the predetermined ones of said pixel elements forming a part of the second readable Data Matrix code, the only difference being the pattern of the Data Matrix codes.

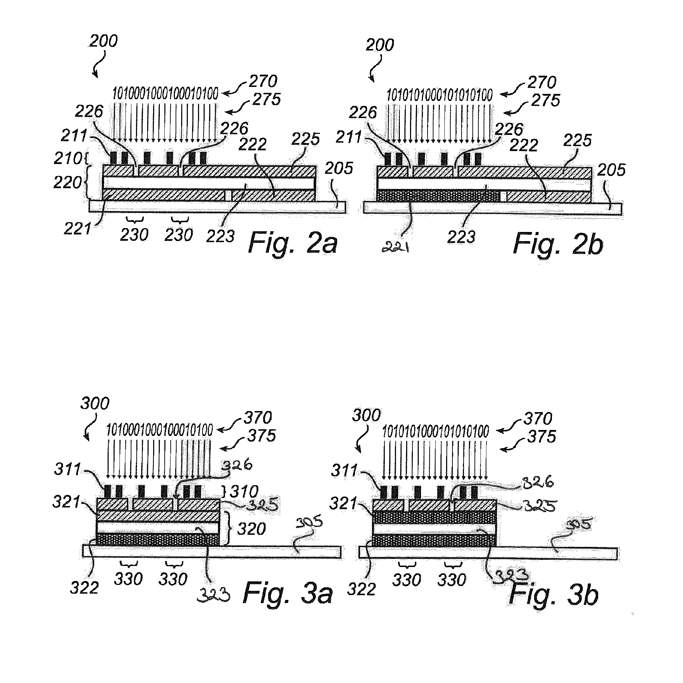

**Viewing direction:** the viewing direction is the geometrical direction along which the viewer normally views the data matrix code arrangement, e.g. the direction as indicated by the parallel lines/arrows in fig. 2 to fig.7. In other words the viewing direction is a direction referring to the origin of a geometrical axis extending from the viewer. In other words, the viewing direction coincides with the normal vector of the electrochromic layer. In more detail, the viewing direction runs from the viewer towards the front side of the data matrix code arrangement.

**Low-cost printing:** low-cost printing refers to manufacturing using conventional printing methods, such as screen printing, flexography, gravure, ionic self-assembled multilayer, aerosol-jet printing, bar-coating, spin-coating, offset lithography and inkjet printing, in normal ambient conditions, such as at room temperature and in normal pressure conditions. Low-cost printing may e.g. comprise manufacturing in a temperature interval around room temperature, such as between 10 and 60 degrees Celsius, or between 10 and 40 degrees Celsius, or between 15 and 35 degrees Celsius.

In addition, low-cost printing may further advantageously entail processing steps, such as printing of one or several of the different layers in normal pressure conditions, such as about 100 kPa or 1 atm, or in pressure conditions between 80 and 120 kPa, and in ambient air conditions.

Hence, in low-cost printing manufacturing, expensive and cumbersome equipment and/or manufacturing conditions operating substantially outside room temperature or normal ambient conditions, such as vacuum equipment and/or clean room facilities, are not required or may be significantly reduced. However, the manufacturing may further comprise thermal drying processes involving substantially higher temperatures, e.g. to shorten the drying time, solidifying and/or curing layers and segments of the fixed image display device, such as the electrolyte segments.

The printing of the static pattern may be performed by means of e.g. any conventional graphic printing method, such as intaglio, thermotransfer, laser gravure, letterpress printing, photogravure, offset printing, flexographic printing, screen-printing, inkjet printing, Xerox etc.

The ink for the printing of the static pattern may be any ink having a suitable colour, such as commercially available printing ink.

**Off state:** the off state or the in-active state of the display is when the power is turned off, and all pixels of the display have substantially the same color and appearance. I.e. a voltage applied across the display, if any, is not sufficiently high to cause a change in color of the pixels of the display. Further, this color of the pixels is referred to as the background color of the display.

**On state:** the on state or the active state of the display is when the power is turned on and a subset of the pixels of the display has a color which is substantially different from the background color of the display. This color is referred to as the motif color of the display. The color change of the pixels is initiated and progressed by a voltage difference being applied across the display via said counter electrode layers.

**Layer:** according to one embodiment, the fixed image display device has a laminate structure and consists of "layers" of different materials. These layers can be continuous and/or patterned or pixelated, and can be applied to each other (self-supporting device) or to a support or carrier (supported device). These terms, self-supporting/supported, may also be used for a separate layer. A self-supporting layer is a layer which may be handled on its own and e.g. mounted in a printing machine, without collapsing and without the need of additional supporting layers. A self-supporting substrate may be a carrier which is used for transporting the Data Matrix code arrangement e.g. before applying it to a product. The self-supporting substrate may also be the package for a product, wherein or whereon said Data Matrix code arrangement is arranged. The Data Matrix code arrangement may be arranged as a top, bottom or intermediate layer(s) of the package material, and for instance applied to the package material at the manufacturing process of the package material. The Data Matrix code arrangement may also be arranged on said package material as a separate step, after the manufacturing process of the package material has been completed. Furthermore, the term layer may encompass all of the same material in the same plane, regardless whether this material is patterned or interrupted in such a way as to form discontinuous "islands" in the plane.

**Insulating layer:** the insulating layer may comprise paper and/or plastic and may be formed of a layer comprising plastic, a plastic film or plastic foil such as a polyester foil, it may also be formed of a layer comprising paper or cardboard. Also, as for layers, commercial films or sheets can be used, and films formed by a cast film process may also be used. Additionally or alternatively, said insulating layer comprise a lacquer and/or varnish and/or resin, which may outline the area of contact between the electrolyte layer and the electrochromic layer. Examples of commercial printing inks and printable varnishes are Electrodag PD-011B™ from Henkel GmbH, UVIJET Omniplus UL-025 from Fujifilm Sericol Ltd., DuPont 5018A, a clear varnish from DuPont, Ultragraph UVAR från Spacio. Further, monomers and other compounds may be added to modify the surface tension of the commercial inks to give a symbol defining layer with good coverage and with few pinholes.

**Electrochromic:** An electrochromic material(s) may be organic or inorganic, low molecular or polymeric. Such an electrochromic layer, independent of whether it is composed of one material or is an ensemble of more than one material, combines the following properties: at least one material is electrically conducting, i.e. electronically and/or ionically conducting, in at least one oxidation state, and at least one material is electrochromic, i.e. exhibits color change as a result of electrochemical redox reactions within the material. Optionally, the electrochromic layer may comprise an electrochemically active material.

**Electrochemically active:** an "electrochemically active" layer according to the present invention is a piece of a material having an electronic conductivity that can be electrochemically altered through change of the redox state of said material. Normally, at least a portion of an electrochemically active element is in ionic contact with an electrolyte, and the electrochemically active element may furthermore be integrated with one or more electrodes, where said electrodes are being composed of the same or different materials as the electrochemically active element. The electrode may also be arranged on top of said electrochemically active material.

**Coloring state/change:** when reference is made to "coloring state/change", this is also meant to include changes in optical density or reflectance, so that "coloring change" or "coloring state" for example takes into account changes, or intermediate states, from blue to red, blue to colorless, colorless to blue, dark green to light green, dark blue to light blue, grey to white or dark grey to light grey alike.

When reference is made to in what way a color is perceived, this refers to how a suitable reader of the code will perceive the colour.

**Electrochemically active region:** In relation to this invention the electrochemically active region of a pixel element may be defined by the interface between the electrolyte segment and the associated pixel portion of the electrochemically active pixel layer.

**Electronically conductive material:** In relation to this invention the counter electrode segments comprises an electronically conducting material capable of conducting electrons, such as electronically conductive polymers, for example PEDOT:PSS (poly(3,4-ethylenedioxythiophene) poly(styrene sulfonate)), carbon, inert metals or electrochemically inert metals or materials such as gold, titanium, platinum, graphite, graphene, noble metals and inert metals, or other conducting material which may be suitable for being in contact with electrochemically active layers, or combinations of such electron conductive materials. Normally, conducting materials suitable for being in contact with electrochemically active layers are inert such that they do not give rise to substantial electrochemical reactions. These materials may e.g. be provided as an ink or paste which may be arranged in passages or vias during a manufacturing, or pre-manufacturing, process.

**Direct physical contact:** Direct physical contact (common interface) between two phases that allows for the exchange of charges through the interface. Charge exchange through the interface can comprise transfer of electrons between electronically conducting phases, transfer of ions between ionically conducting phases, or conversion between electronic current and ionic current by means of electrochemistry at an interface between for example counter electrode and electrolyte or an interface between electrolyte and electrochromic layer, or material, or by occurrence of capacitive currents due to the charging of the Helmholtz layer at such an interface.

**Electronically connected:** a first and a second material or item are electronically connected, i.e. in electronic contact with each other, when electrons may be transported from the first material/feature at least up to the second material/feature, and/or vice versa. A first and a second material/- feature are also electronically connected, i.e. in electronic contact with each other, when electrons may be transported from the first material/feature up to, and into, the second material/feature, and/or vice versa. Hence, an electronic conductor may be in electronic contact with, or electronically connected to, an electrolyte. Two electronic conductors may also by in electronic contact with each other.

**In direct electronic contact:** a first and a second material/feature are in direct electronic contact with each other, when electrons may be transported along the first material/feature at least up to the interface between the first and the second materials/features, and/or vice versa.

**In indirect electronic contact:** a first and a second materials/features are in indirect electronic contact with each other, when electrons may be transported from the first material/feature, via a third or more material(s)/feature(s), at least up to the second material/feature; and/or from the second material/feature, via the third or more material(s)/feature(s), at least up to the first material/feature.

In other words, two materials may be in electronic contact with each other, or electronically connected to each other, e.g. by direct physical contact or via a third intermediate material. A layer of carbon in direct contact (common interface) with a first and a second electrochemically active layer is one example of a material which may provide electronic contact between the two electrochemically active layers. Furthermore, two materials may be electronically connected by being in direct electronic contact or by being in indirect electronic contact.

**Ionically connected:** a first and a second material are ionically connected when ions may be transported from the first material to the second material, and/or vice versa. In more detail, a first and a second material are ionically connected, or in direct ionic contact, when ions may be transported from the first material at least to the interface between the first and the second material, and/or vice versa.

**Ionic contact** between two elements is e.g. provided by at least one material being capable of transporting ions between the two elements. An electrolyte, in direct ionic contact (common interface) with an electrochemically active layer and a patterned electrode layer, is one example of a material which may provide ionic contact between the electrochemically active layer and the patterned electrode layer. The electrolyte may hence be referred to as being in ionic contact with, or ionically connected to, each one of the electrochemically active layer and the patterned electrode layer.

**Electrochromic and electrochemically active polymers** for use in the display are for example selected from the group consisting of electrochromic polythiophenes, electrochromic polypyrroles, electrochromic polyanilines, electrochromic polyisothianaphthalenes, electrochromic polyphenylene vinylenes and copolymers thereof. In an embodiment, the electrochromic polymer is a homopolymer or copolymer of a 3,4-dialkoxythiophene, in which said two alkoxy groups may be the same or different or together represent an optionally substituted oxy-alkylene-oxy bridge. In yet an embodiment, the electrochromic polymer is a homopolymer or copolymer of a 3,4-dialkoxythiophene selected from the group consisting of poly(3,4-methylenedioxythiophene), poly(3,4-methylenedioxythiophene) derivatives, poly(3,4-ethylenedioxythiophene), poly(3,4-ethylenedioxythiophene) derivatives, poly(3,4-propylenedioxythiophene), poly(3,4-propylenedioxythiophene) derivatives, poly(3,4-butylenedioxythiophene), poly(3,4-butylenedioxythiophene) derivatives, and copolymers therewith. The polyanion compound is then preferably poly(styrene sulfonate).

As is readily appreciated by the skilled man, in alternative embodiments of the invention, the electrochromic material comprises any non-polymer material, combination of different non-polymer materials, or combination of polymer materials with non-polymer materials, which exhibit conductivity in at least one oxidation state as well as electrochromic behavior. For example, one could use a composite of an electronically conducting material and an electrochromic material, such as electronically conductive particles, such as indium tin oxide (ITO) or antimony tin oxide (ATO), with polymer or non-polymer electrochromic materials such as polyaniline, polypyrrole, polythiophene, nickel oxide, polyvinylferrocene, polyviologen, tungsten oxide, iridium oxide, molybdenum oxide and Prussian blue (ferric ferrocyanide). As non-limiting examples of electrochromic elements for use in the device of the invention, mention can be made of: a piece of PEDOT:PSS, being both conducting and electrochromic; a piece of PEDOT:PSS with Fe²⁺ /SCN⁻, PEDOT:PSS being conducting and electrochromic and Fe²⁺ /SCN⁻ being an additional electrochromic component (see below); a piece composed of a continuous network of conducting ITO particles in an insulating polymeric matrix, in direct electronic contact with an electrochromic WO3-coating; a piece composed of a continuous network of conducting ITO particles in an insulating polymeric matrix, in contact with an electrochromic component dissolved in an electrolyte. As described above, display may comprise a further electrochromic material for realization of displays with more than one color. This further electrochromic material can be provided within the electrochromic pixel element or the solidified electrolyte, which then for example comprises an electrochromic redox system, such as the redox pair of colorless Fe²⁺ and SCN- ions on one hand, and of red Fe³⁺ (SCN)(H2O)₅ complex on the other. By way of further, non-limiting example, such materials may be selected from different phenazines such as DMPA - 5,10-dihydro-5,10-dimethylphenazine, DEPA - 5,10-dihydro-5,10-diethylphenazine and DOPA - 5,10-dihydro-5,10-dioctylphenazine, from TMPD - N,N,N',N'-tetramethylphenylenediamine, TMBZ - N,N,N',N'-tetramethylbenzidine, TTF - tetrathiafulvalene, phenanthroline-iron complexes, erioglaucin A, diphenylamines, p-ethoxychrysoidine, methylene blue, different indigos and phenosafranines, as well as mixtures thereof.

**Solidified electrolyte:** for the purposes of the invention, "solidified electrolyte" means an electrolyte, which at the temperatures at which it is used is sufficiently rigid that particles/flakes in the bulk therein are substantially immobilized by the high viscosity/rigidity of the electrolyte and that it does not flow or leak. In the preferred case, such an electrolyte has the proper rheological properties to allow for application of this material on a support in an integral sheet or in a pattern, for example by conventional printing methods. After deposition, the electrolyte formulation should solidify upon evaporation of solvent or because of a chemical cross-linking reaction, brought about by additional chemical reagents or by physical effect, such as irradiation by ultraviolet, infrared or microwave radiation, cooling or any other such. The solidified electrolyte may for example comprise an aqueous or organic solvent-containing gel, such as gelatine or a polymeric gel. However, solid polymeric electrolytes are also contemplated and fall within the scope of the present invention. Furthermore, the definition also encompasses liquid electrolyte solutions soaked into, or in any other way hosted by, an appropriate matrix material, such as a paper, a fabric or a porous polymer. In some embodiments of the invention, this material is in fact the support upon which the electrochromic device is arranged, so that the support forms an integral part of the operation of the electrochromic device.

The solidified electrolyte may comprise a binder. It is preferred that this binder have gelling properties. The binder is preferably selected from the group consisting of gelatine, a gelatine derivative, polyacrylic acid, polymethacrylic acid, poly(vinylpyrrolidone), polysaccharides, polyacrylamides, polyurethanes, polypropylene oxides, polyethylene oxides, poly(styrene sulphonic acid) and poly(vinyl alcohol), and salts and copolymers thereof; and may optionally be cross-linked. The solidified electrolyte preferably further comprises an ionic salt, preferably magnesium sulphate if the binder employed is gelatine. The solidified electrolyte preferably further contains a hygroscopic salt such as magnesium chloride to maintain the water content therein. The electrolyte may be formed by one of the materials listed above or by a combination of two or more of these materials.

For example, the electrolyte has reological properties which makes it suitable for printing e.g. by ink-jet printing or by a roll-to-roll process. Regarding reological properties, electrolyte viscosity may be considered. Exemplifying intervals of electrolyte viscosity (mPas) for different printing methods are:
- Inkjet printing: 1-20
- Flexo printing: 20-400
- Screen printing: 1000-100000
- Offset printing: 1000-100000
- Gravure printing: 20-200

In summary, the material selection and the vertical architectural configuration of the display allows for a manufacturing process comprising conventional printing techniques. Such conventional printing techniques may encompass bar coating, screen printing, spin-coating, ink-jet printing, aerosol-jet printing, or any other such manufacturing procedure.

The architecture of the display device also allows for use of manufacturing procedures that are easily scalable to larger scale manufacturing, which, in turn, allows for faster and low cost manufacturing, such as low-cost printing described above.

Generally, other objectives, features, and advantages of the present invention that will appear from the following detailed disclosure, from the attached dependent claims as well as from the drawings are equally possible within the scope of the invention.

### Brief description of the drawings

Embodiments of the invention will now be described, by way of example, with reference to the accompanying drawings, wherein:
Fig. 1a illustrates examples of QR codes and partial QR codes.
Figures 2-7 illustrate different examples of the display.
Figure 8 illustrate one example of different layers of the display.

### Detailed description of Embodiments of the Invention

In the drawings, similar or equal elements are referred to by the same reference numerals.

It should be noted that the embodiments described herein by no means limits the scope of the invention, which is equally applicable to, for example, Data Matrix code arrangements comprising other Data Matrix codes besides QR-codes. The Data Matrix codes may e.g. be described in an ISO standard such as e.g. ISO/IEC 16022:2006, but the Data Matrix codes may as well not being described by a standard.

According to one example the Data Matrix code arrangement comprises at least two unique readable QR-codes. The first code is a code with fewer pixels activated than the second code, and is displayed by the fix QR code. The second code has more pixels activated, and is displayed by the sum of the fix QR code and the pixels activated in the display. When following the standards for the encoding system it is normally not possible to change the bit status in one direction e.g. make some of the pixels dark (herein called activated or active). Whether the pixels are changed to a darker or lighter pixel is of no importance just as long as the contrast change is big enough for distinguish between two states. Due to the code correction system it is normally not possible to change only one pixel in a QR code in order to provide a new QR code, which is interpreted differently than the first.

Since the Data Matrix code arrangement in some cases only will have limited access to energy it is normally preferred that no pixel is active in the first code representation. Therefore, according to at least on example embodiment, the display should preferably not be used for forming the first code. Which in turn means that the second code normally comprises all the segments of the first code, plus a number of activated pixels from the second code. By not deactivate any pixel and utilize the code correction algorithm the code will be correctly interpreted as long as the number of pixels that should have been deactivated do not excess the capacity of the correction system. According to the QR-code standard the approximate correction capability is between 7-30% depending of level used and size of the code. The first code can be a code fulfilling the standard and the second code can contain as many errors (not deactivated pixels) as the code correction can correct. It is also possible to introduce all errors (not activated pixels) in the first code and make the second code perfectly fulfilling the standard. By distributing the errors between the two codes it is more likely to find readable code pairs.

When creating the code pair the means of how the code is created is of no importance as long as the codes fulfills above description. One way to create the code pair is to generate standard codes in a desired interval or by random generation. The generated codes are compared to each other and the code pair with a minimum numbers of pixels needed to be activated is evaluated by readability. The comparison can be made by giving a penalty for each non wanted deviation e.g. one penalty value for each pixel changed and one penalty value for every pixel deactivated between two codes, by choosing the lowest penalty scores the best code pairs is in the generated set may be detected. If no readable cod pair is detected the number of codes generated has to been extended.

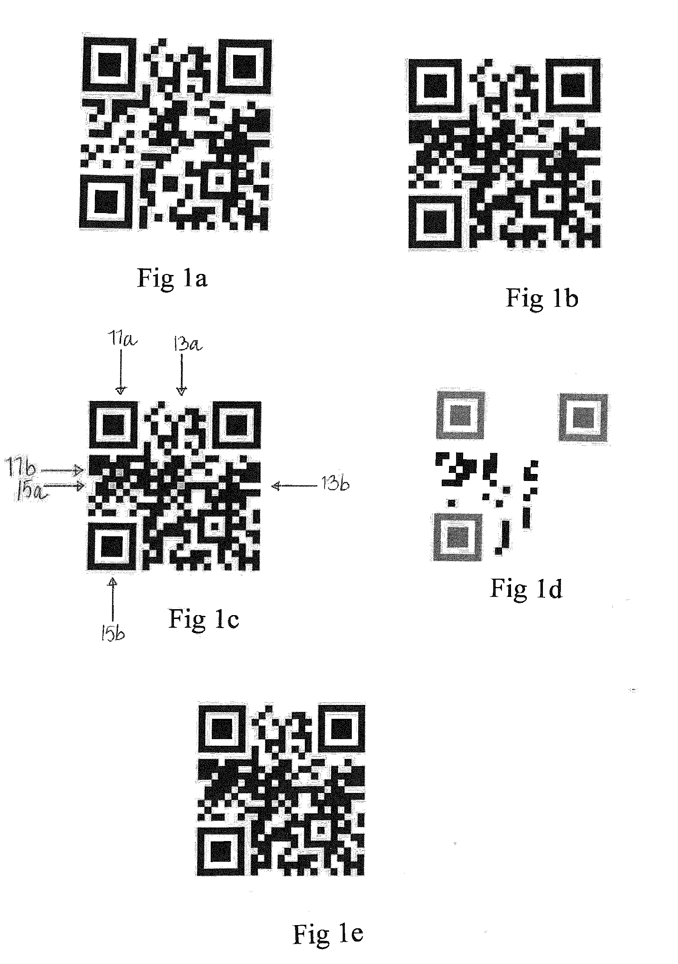

As an example the address space http:/www.acreo.se/qrcodes/00001.htm to http:/www.acreo.se/qrcodes/9999.htm) comprises the a first perfect QR code 110 http:/www.acreo.se/qrcodes/72701.htm, illustrated in Figure 1a and a second perfect QR code 120 http:/www.acreo.se/qrcodes/04111.htm, illustrated in Figure 1b, which first and second QR codes 110, 120 forms a code pair.,

The three marked segments in Figure 1 c, marks the segments which are active in the first code 110, but which are not active in the second code 120. The first segment is marked or indicated by a first pair of arrows 11 a, 11 b, indicating a first column and a first row, respectively, and the first marked segment is arranged at the intersection of the first pair of arrows. The second segment is marked or indicated by a second pair of arrows 13a, 13b, indicating a second column and a second row, respectively, and the second marked segment is arranged at the intersection of the second pair of arrows. The third segment is marked or indicated by a third pair of arrows 15a, 15b, indicating a third column and a third row, respectively, and the third marked segment is arranged at the intersection of the second pair of arrows. Additionally, the marked segments are gray in the QR code.

The partial QR code 130 illustrated in Figure 1d marks the segments which are active in the second QR code 120, but not active in the first QR code 110. The active segments of the partial QR code 130 may be generated by predetermined pixel elements of a display.

A fourth QR code 140, which is readable but non-perfect, is illustrated in Figure 1e. The fourth code is the sum of the active segments in the first QR code 110 and the active segments of the second QR code 120. In other words, when aligned said first QR code 110 and the segments of said partial QR code 130 together forms a fourth readable QR code 140. Although, the fourth QR code is not a perfect QR code, the error correction algorithm will construe or reconstruct this code to the second QR code 120.

In other words, one way of forming two readable QR codes is to print the active segments of the first QR code 110 as the fix QR code, and enabling the predetermined pixel elements of a display to display the partial QR code 130. Provided that the fix QR code and the display is aligned, the fix QR code and predetermined pixel elements 130 will, when switched, together form a readable QR code which is different from said first readable QR code.

One way of aligning the codes is to utilize the three squares in the corners of the QR codes, but there are many other well known ways of doing this as is known in the art.

This above described method is possible to apply to other optical readable two dimension matrix codes that has error correction of sufficient rang, such as Data Matrix codes.

Figures 2a and 2b schematically illustrate a cross-section of a Data Matrix code arrangement 200 comprising a fix Data Matrix-code 210 and a lateral display 220. In Figure 2a the display is arranged in its first state wherein the display is in its off state. In Figure 2b the display is arranged in its second state wherein the display is in its on state.
In general, the Data Matrix code arrangement 200 comprises:
- a fix Data Matrix code 210 comprising a static pattern forming a first readable Data Matrix code;
- a display 220 comprising pixel elements, wherein each pixel element comprises:
- an electrochromic layer 221 preferably comprising electrically conductive and electrochemically active organic polymer material, said electrochromic layer 221 being switchable, such as electrochemically switchable, between at least two different coloring states;
- a counter electrode layer 222 comprising electronic conductive material;
- an electrolyte layer, which electrolyte layer 223 ionically connects said electrochromic layer 221 and said counter electrode layer 222;
- control means arranged for applying a predetermined potential difference across predetermined ones of said pixel elements, so as to cause a colour switch of these pixel elements;
- wherein said fix Data Matrix (210) code and said display (220) is aligned such that the static pattern of said first Data Matrix code and said predetermined ones of said pixel elements, when switched, forms a second readable Data Matrix code, which is different from said first readable Data Matrix code.

In more detail the Data Matrix code arrangement illustrated in Figure 2a and 2b comprises a substrate 205 comprising paper and/or plastic. The substrate may be transparent, semi-transparent or opaque. On said substrate a first continuous electrochromic layer 221 comprising electrochromic and electrochemically active polymers is arranged. Adjacent to this first electrochromic layer 221 there is arranged a second continuous counter electrode layer 222 comprising electronically conductive material. An electrolyte layer covers both said first electrochromic layer 221 and said second counter electrode layer 222, such that the two layers 221, 222 are ionically connected. In more detail, the electrolyte covered surfaces of electrochromic layer 221 and the counter electrode layer 222 faces in the same direction. On top of said electrolyte there is arranged an insulating layer 225 comprising openings 226, which openings 226 are arranged at locations where a change in colour of the electrochromic layer is desired to be visible. The fix Data Matrix-code 210 is arranged on top of the insulating layer 225, by printing a binary pattern thereon. The difference in perceived colour of the printed segments 211 of the fix Data Matrix-code and preceived colour of the insulating layer, is preferably sufficient for a reader of the Data Matrix-code to distinguish the binary pattern.

The colour and transparency of the insulating layer is preferably selected such that the perceived colour of the insulating layer substantially corresponds to the perceived colour of the first electrochromic layer in its off-state, when viewed through the openings 226 in the insulating layer. In other words, the first "0" from the left of the code 270, is preferably perceived as having substantially the same colour as the third "0" from the left of the code 270. In other words, a reader should preferably interpret both positions as "0". The parallel lines from the code 275 towards the Data Matrix-code arrangement 220 indicates the viewing direction.

In other words, as long as the display is in its inactive state, a reader will interpret the Data Matrix-code arrangement as the first readable Data Matrix code. By applying a potential difference between the first electrochromic layer 221 and the counter electrode 222 and electrochemical reaction will be initiated which alters the colour of the first electrochromic layer 222, as can be seen in Figure 2b. The colour and transparency of the printed segments 211 of the fix Data Matrix-code is preferably selected such that it substantially corresponds to the colour of the first electrochromic layer in its on-state, as perceived through the openings 226 in the insulating layer. In other words, the first "1" from the left of the code 270, is preferably perceived as having substantially the same colour as the third "1" from the left of the code 270. In other words, a reader should preferably interpret both positions as "1 ". By switching the colour of the electrochromic layer, one row of the code has switched from "1010001000100010100" to "1010101000101010100"

With reference to this embodiment and similar ones, the alignment of the fix Data Matrix-code and the display is determined by the relative position between the printed segments 211 of the fix Data Matrix-code 210 and the openings in the insulating layer.

Preferably, said first continuous layer covers the whole surface area of the Data Matrix code, such that only the positions of the openings in the insulating layer need to be adjusted in order to generate a different pattern on the display. Alternatively, said first continuous layer covers a smaller surface area than the whole surface area of the Data Matrix code to be displayed. However, the layer is still preferably continuous and covers all the openings the lacquer layer corresponding to the selected pattern for the display.

Figures 3a and 3b schematically illustrate a cross-section of a Data Matrix code arrangement 300 comprising a fix Data Matrix-code 310 a vertical display 320. In Figure 3a the display is arranged in its first state wherein the display is in its off state. In Figure 3b the display is arranged in its second state wherein the display is in its on state.

In general, the Data Matrix code arrangement 300 comprises:
- a fix Data Matrix code 310 comprising a static pattern forming a first readable Data Matrix code;
- a display 320 comprising pixel elements 330, wherein each pixel element comprises:
- an electrochromic layer 321 preferably comprising electrically conductive and electrochemically active organic polymer material, said electrochromic layer 321 being switchable between at least two different coloring states;
- a counter electrode layer 322 comprising electronic conductive material;
- an electrolyte layer, which electrolyte layer 323 ionically connects said electrochromic layer 321 and said counter electrode layer 322;
- control means arranged for applying a predetermined potential difference across predetermined ones of said pixel elements, so as to cause a colour switch of these pixel elements;
- wherein said fix Data Matrix 310 code and said display 320 is aligned such that the static pattern of said first Data Matrix code and said predetermined ones of said pixel elements, when switched, forms a second readable Data Matrix code, which is different from said first readable Data Matrix code.

In more detail, the Data Matrix-code arrangement illustrated in Figures 3a and 3b is equal to the one in Figures 2a and 2b, except that instead of being arranged on two respective faces of the electrochromic layer and the counter electrode layer, which faces in the same direction - the electrochromic layer 321 and the counter electrode 322 are stacked on each other; and the electrolyte layer 323 is sandwiched between the electrochromic layer 321 and the counter electrode 322. In a similar manner as described in relation to Figures 2a and 2b, the first electrochromic layer 321 may cover the whole surface area of the Data Matrix code, such that only the positions of the openings in the insulating layer need to be adjusted in order to generate a different pattern on the display. Alternatively, said first continuous layer covers a smaller surface area than the whole surface area of the Data Matrix code. However, the layer is still preferably continuous and covers all the openings the lacquer layer corresponding to the selected pattern for the display. Further, the counter electrode layer 322 preferably covers the same surface area as the electrochromic layer 321. The counter electrode layer may also cover a larger surface area, or even a smaller one, as long as it is sufficiently large to allow a reaction of the portion of the electrochromic layer which covers the openings of the insulating layer.

A switch of the code is achieved by applying a potential difference between the first electrochromic layer 321 and the counter electrode layer 322 in an analogous manner to what was described in relation to Figure 2a and 2b, such that an electrochemical reaction is initiated.

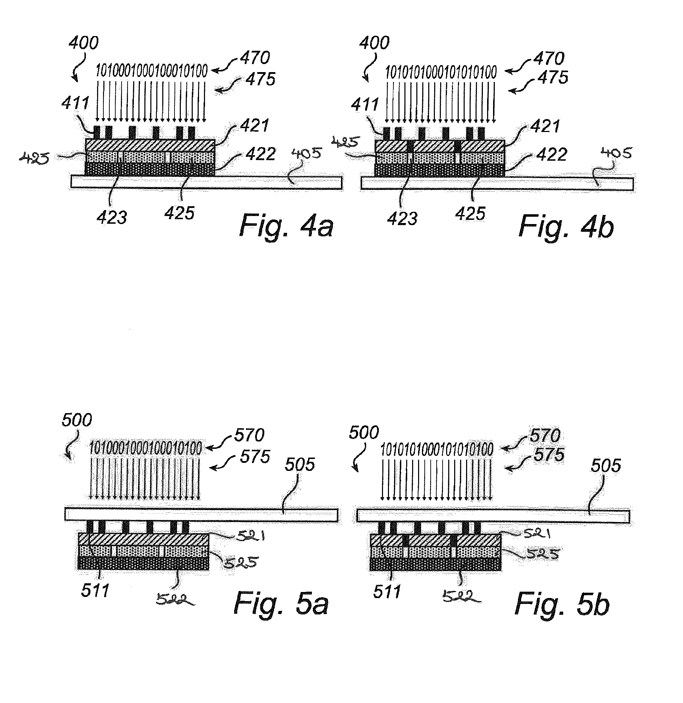

Figures 4a and 4b schematically illustrate a cross-section of a Data Matrix code arrangement 400 comprising a fix Data Matrix-code 410 and a vertical display 420. In Figure 4a the display is arranged in its first state wherein the display is in its off state. In Figure 4b the display is arranged in its second state wherein the display is in its on state.

In general, the Data Matrix code arrangement 400 comprises:
- a fix Data Matrix code 410 comprising a static pattern forming a first readable Data Matrix code;
- a display 420 comprising pixel elements 430, wherein each pixel element comprises:
- an electrochromic layer 421 preferably comprising electrically conductive and electrochemically active organic polymer material, said electrochromic layer 421 being switchable between at least two different coloring states;
- a counter electrode layer 422 comprising electronic conductive material;
- an electrolyte layer, which electrolyte layer 423 ionically connects said electrochromic layer 421 and said counter electrode layer 422;
- control means arranged for applying a predetermined potential difference across predetermined ones of said pixel elements, so as to cause a colour switch of these pixel elements;
- wherein said fix Data Matrix 410 code and said display 420 is aligned such that the static pattern of said first Data Matrix code and said predetermined ones of said pixel elements, when switched, forms a second readable Data Matrix code, which is different from said first readable Data Matrix code.

In more detail, the Data Matrix-code arrangement illustrated in Figures 4a and 4b is equal to the one in Figures 3a and 3b, except that the insulating layer 425 is sandwiched between the first electrochromic layer 421 and the second counter electrode layer 422. Moreover, the electrolyte layer 423 is arranged in the openings 426 of the insulating layer 425. When manufacturing this device one may arrange the counter electrode layer on the insulating layer, or vice versa, and thereafter print the electrolyte on the insulating layer such that it penetrates into the openings of the insulating layer and makes contact with the counter electrode layer.

Consequently, the colour and transparency of the layers is preferably selected such that the perceived colour of the first electrochromic layer 421 in its off-state is substantially the same throughout the display. In other words, the first "0" from the left of the code 270, is preferably perceived as having substantially the same colour as the third "0" from the left of the code 270. In other words, a reader should preferably interpret both positions as "0".

Furthermore, as long as the display is in its inactive state, a reader will interpret the Data Matrix-code arrangement as the first readable Data Matrix code. By applying a potential difference between the first electrochromic layer 421 and the counter electrode 422 and electrochemical reaction will be initiated at the openings 426 of the insulating layer 425, which alters the colour of corresponding portions 427 of the first electrochromic layer 422, as can be seen in Figure 4b.

The colour and transparency of the printed segments 411 of the fix Data Matrix-code 410 is preferably selected such that it substantially corresponds to the colour of the first electrochromic layer 421 in its on-state. In other words, the first "1" from the left of the code 470, is preferably perceived as having substantially the same colour as the third "1" from the left of the code 470. In other words, a reader should preferably interpret both positions as "1". By switching the colour of the electrochromic layer, one row of the code has switched from "1010001000100010100" to "1010101000101010100"

Figures 5a and 5b schematically illustrate a cross-section of a Data Matrix code arrangement 500 comprising a fix Data Matrix-code 510 and a vertical display 520. In Figure 5a the display is arranged in its first state wherein the display is in its off state. In Figure 5b the display is arranged in its second state wherein the display is in its on state.

In more detail, the Data Matrix-code arrangement 500 illustrated in Figures 5a and 5b is equal to the one in Figures 4a and 4b, except that the substrate 505 is transparent or semi-transparent and in a viewing direction is arranged in front of the fix Data Matrix display. From a manufacturing point of view, this means that the Data Matrix-code arrangement may be produced by starting to print the fix Data Matrix-code 510, instead of by starting to print the counter electrode layer. For all embodiments, one may also start by printing on the insulating layer.

For all the embodiments described above, the substrate may transparent or semi-transparent and in a viewing direction is arranged in front of the fix Data Matrix display.

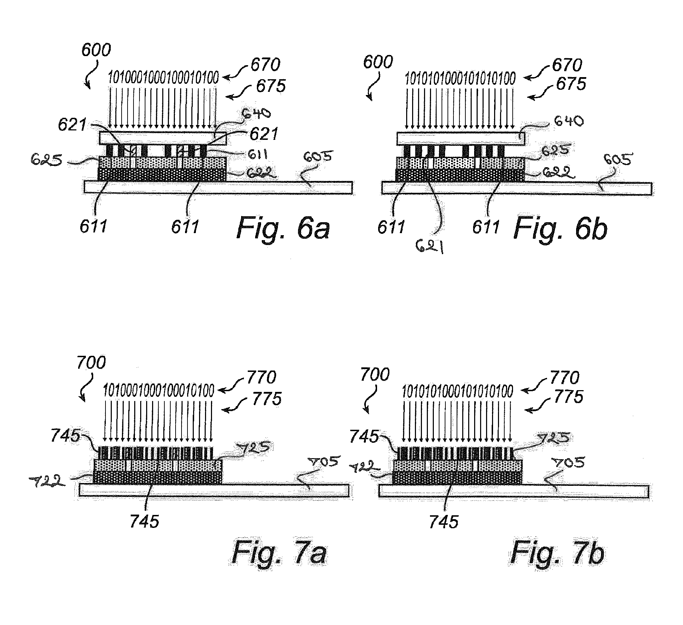

Figures 6a and 6b schematically illustrate a cross-section of a Data Matrix code arrangement 600 comprising a fix Data Matrix-code 610 and a vertical display 620. In Figure 6a the display is arranged in its first state wherein the display is in its off state. In Figure 6b the display is arranged in its second state wherein the display is in its on state.

In more detail, the Data Matrix-code arrangement 600 illustrated in Figures 6a and 6b is equal to the one in Figures 4a and 4b, except that the first electrochromic layer 621 is not continuous. Instead, both the fix Data Matrix code 610 and the first electrochromic layer 621are printed as segments 611, 621 on the insulating layer 625. Additionally, a transparent conductor 640 is arranged on top of the first electrochromic layer 621, such that different potentials may be applied to said first electrochromic layer 621 and said counter electrode layer 622, respectively. Said transparent conductor is arranged as a continuous layer which covers all the segments of said first electrochromic layer 621.

A transparent conductor may comprise e.g. indium tin oxide (ITO), antimony tin oxide (ATO), Polyanilin or similar, grafen, PolyTC

Consequently, the colour and transparency of the layers are preferably selected such that the perceived colour of the first electrochromic layer 621 in its off-state is substantially the same as the perceived colour of the insulating layer 625. In other words, the first "0" from the left of the code 270, is preferably perceived as having substantially the same colour as the third "0" from the left of the code 270. In other words, a reader should preferably interpret both positions as "0".

Moreover, the difference in perceived colour of the printed segments 611 of the fix Data Matrix-code and perceived colour of the insulating layer 625, is preferably sufficient for a reader of the Data Matrix-code to distinguish the binary pattern. Additionally, the difference in perceived colour of the printed segments 611 of the fix Data Matrix-code and first electrochromic layer 621 in its off-state, is preferably sufficient for a reader of the Data Matrix-code to distinguish the binary pattern

Furthermore, as long as the display is in its inactive state, a reader will interpret the Data Matrix-code arrangement as the first readable Data Matrix code. By applying a potential difference between the first electrochromic layer 621 and the counter electrode 622 and electrochemical reaction will be initiated at the openings 626 of the insulating layer 625, which alters the colour of corresponding portions of the first electrochromic layer 621, as can be seen in Figure 6b.

The colour and transparency of the printed segments 611 of the fix Data Matrix-code 610 is preferably selected such that it substantially corresponds to the colour of the first electrochromic layer 621 in its on-state. In other words, the first "1" from the left of the code 470, is preferably perceived as having substantially the same colour as the third "1" from the left of the code 470. In other words, a reader should preferably interpret both positions as "1". By switching the colour of the electrochromic layer, one row of the code has switched from "1010001000100010100" to "1010101000101010100"

Figures 7a and 7b schematically illustrate a cross-section of a Data Matrix code arrangement 700 comprising a fix Data Matrix-code 710 and a vertical display 720. In Figure 7a the display is arranged in its first state wherein the display is in its off state. In Figure 7b the display is arranged in its second state wherein the display is in its on state.

In general, the Data Matrix code arrangement 700 comprises:
- a fix Data Matrix code 710 comprising a static pattern forming a first readable Data Matrix code;
- a display 720 comprising pixel elements 730, wherein each pixel element comprises:
- an electrochromic layer 721 preferably comprising electrically conductive and electrochemically active organic polymer material, said electrochromic layer 721 being switchable between at least two different coloring states;
- a counter electrode layer 722 comprising electronic conductive material;
- an electrolyte layer, which electrolyte layer 723 ionically connects said electrochromic layer 721 and said counter electrode layer 722;
- control means arranged for applying a predetermined potential difference across predetermined ones of said pixel elements, so as to cause a colour switch of these pixel elements;
- wherein said fix Data Matrix 710 code and said display 720 is aligned such that the static pattern of said first Data Matrix code and said predetermined ones of said pixel elements, when switched, forms a second readable Data Matrix code, which is different from said first readable Data Matrix code.

In more detail, the Data Matrix-code arrangement illustrated in Figures 7a and 7b is equal to the one in Figures 6a and 6b, except that the instead of the continuous transparent conductor 640 a number of electrodes 745 are provided, each one being electronically connected to one or more of said segments of said first electrochromic layer. The electrodes 745 may be arranged as parallel lines, wherein each line is connected to a row of segments of said first electrochromic layer. Alternatively, said electrodes may have a more random pattern.

In the embodiments described above the control means are passive, i.e. they comprise no logic circuit.

According to one alternative embodiment, the Data Matrix code arrangement may be arranged as described e.g. in relation to Figure 3, except that the fix Data Matrix pattern may be printed on top of the insulating layer instead of on top of the electrochromic layer, provided that the electrochromic layer is transparent or semi-transparent in is inactive state.

According to one alternative embodiment, electrochromic layer may be reacted such that it becomes lighter than its neutral state, and the colour of the segments of the fix Data Matrix should be adjusted accordingly. A reaction of the electrochromic layer such that it becomes lighter may e.g. be achieved by switching the polarity of the applied potentials.

Furthermore, the display may be arranged as described in e.g. EP 2 312 386 and the segments of the fix Data Matrix pattern may be printed e.g. on the top substrate, 116/216/316 etc, or the electrochromic electrodes 121/221/321 etc. When such a display is used the control means are preferably active, such that the logic circuit may determine which pixels to switch.

Moreover, other displays than the electrochromic displays based on organic polymer material, as described above, may be used. Examples of such displays are electrochromic displays made of inorganic materials, such as viologenes, polyoxotungstates and/or tungsten oxide. Other examples are electrophoretic displays, such as e-ink or Si-Pix, or LEC or electro luminescent displays.

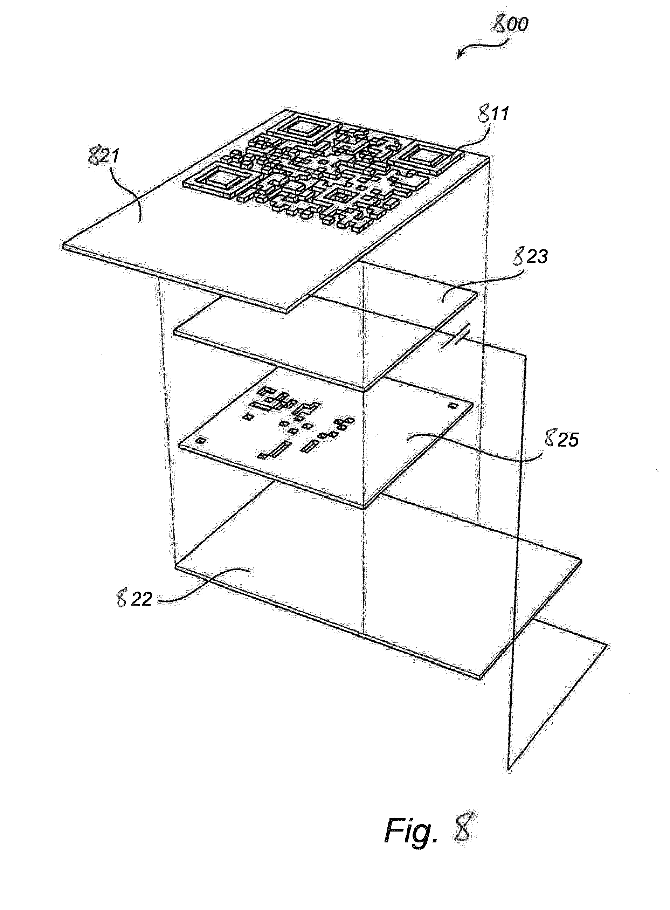

Figure 8 is an exploded perspective view of a Data Matrix code arrangement, comprising a substrate whereon control means 880 and a power source 890 is printed. There is also printed a counter electrode layer 822 which is electronically connected to a first potential of the power source. A lacquer layer 825 comprising opening 826 is printed on top of and within said lacquer layer. Thereafter an electrolyte layer 823 is printed on top of and within said lacquer layer, which electrolyte layer fills the openings 826 of the lacquer layer such that the counter electrode layer and electrode layer is in direct contact with each other. The electrolyte is illustrated as a continuous layer, as it may be provided as such, whereafter a squeege may be used to press the electrolyte into the openings of the lacquer layer. An electrochromic layer 821 comprising PEDOT:PSS is printed on top of said lacquer layer, and such that it is connected to a second potential of the power source. Finally, a segments 811 of a fix Data Matrix code is printed on top of the electrochromic layer and aligned with the holes of the lacquer layer. Each of the printed layers is between 2 and 70 µm thick, or between 15 and 40 µm thick.

Initially the battery is inactivated or disconnected from the display, such that the visible Data Matrix code on the Data Matrix code arrangement is read as the fix Data Matrix code. When desired, the battery is activated or connected to the display, such that the applied potential difference initiates an electrochemical reaction of said electrochromic layer, which electrochromic reaction alter the colour thereof.

It should be noted that the invention has mainly been described above with reference to a few embodiments. However, as is readily appreciated by a person skilled in the art, other embodiments than the ones disclosed above are equally possible within the scope of the invention, as defined by the appended claims. It is further noted that, in the claims, the word "comprising" does not exclude other elements or steps, and the indefinite article "a" or "an" does not exclude a plurality. The mere fact that certain features or steps are recited in mutually different dependent claims does not indicate that a combination of these features or steps cannot be used to an advantage.

## Claims

1. A data matrix code arrangement (200) comprising:
- a fix data matrix code (210) comprising a static pattern forming a first readable Data Matrix code;
- a display (220) comprising pixel elements, wherein each pixel element comprises:
- an electrochromic layer (221) switchable between at least two different coloring states;
- a counter electrode layer (222) comprising electronic conductive material;
- an electrolyte layer (223), which ionically connects said electrochromic layer (221) and said counter electrode layer (222);
- control means arranged for enabling an application of a predetermined potential difference between the electrochromic layer (221) and the counter electrode layer (222) of predetermined ones of said pixel elements, which potential difference initiates and maintains a colour switch of said predetermined ones of said pixel elements;
wherein said fix Data Matrix (210) code and said display (220) are aligned such that the static pattern of said first Data Matrix code and said predetermined ones of said pixel elements, when switched, forms a second readable Data Matrix code, which is different from said first readable Data Matrix code.

2. A data matrix code arrangement (200) according to claim 1, wherein the electrochromic layer (221) comprises electrically conductive and electrochemically active organic polymer material, preferably an EDOT based polymer e.g. PEDOT:PSS.

3. A data matrix code arrangement (200) according to any one of the preceding claims, wherein said electrochromic layer (221) is arranged to act as an electronic conductor, preferably as an electrode, when being in ionic contact with said electrolyte layer (223) and when said electrolyte layer is in ionic contact with said counter electrode layer (222).

4. A data matrix code arrangement (200) according to any one of the preceding claims, wherein said electrolyte layer is sandwiched between said counter electrode layer and said electrochromic layer

5. A data matrix code arrangement (200) according to any one of the preceding claims, wherein said fix Data Matrix code is arranged on a transparent substrate, which in a viewing direction is arranged in front of said display.

6. A data matrix code arrangement (200) according to any one of the preceding claims, wherein at least parts of said fix Data Matrix code is arranged as a display comprising second pixel elements, said second pixel elements forming at least a part of said static pattern.

7. A data matrix code arrangement (200) according to any one of the preceding claims, wherein said fix Data Matrix code and said display is arranged substantially in the same plane.

8. A data matrix code arrangement (200) according to any one of the preceding claims, wherein said control means comprises wiring and control logic arranged to address the predetermined once of said pixel elements, and wherein said data matrix code arrangement further comprises:
- a power source, preferably a battery or an EM field, for supplying a voltage difference across said pixel elements; and
- a sensor arranged to register a difference in ambient conditions, and to provide data describing the registered difference to the control means.

9. A data matrix code arrangement (200) according to any one of the preceding claims, wherein said display further comprises an insulating layer comprising one passage for each of said predetermined ones of said pixel elements, each passage being arranged with an electronic conductor, which electronic conductors is arranged in direct electronic contact with a respective counter electrodes of said predetermined ones of said pixel elements;
- wherein the electrode layer of each pixel element of said predetermined ones of said pixel elements is electronically separated from each other,
- wherein the display further preferably comprises a continuous layer of electrolyte, and the electrolyte layers of said predetermined ones of said pixel elements each is a respective portion of said continuous layer of electrolyte; and
- wherein the display further preferably comprises a continuous layer of electrochromic material, and the electrochromic layers of said predetermined ones of said pixel elements each is a respective portion of said continuous layer of electrochromic material.

10. A data matrix code arrangement (200) according to any one claims 1-9, wherein the electrolyte layer of each pixel element of said predetermined ones of said pixel elements is ionically separated from each other,
- wherein the display further comprises a parallel lines of electronic conductive material, and the counter electrode layers of said predetermined ones of said pixel elements each is a respective portion of said parallel lines of electronic conductive material;
- wherein the display further comprises a parallel lines of electrochromic material, and the electrochromic layers of said predetermined ones of said pixel elements each is a respective portion of said parallel lines of electrochromic material; and
- wherein each parallel line of said electrode layer intersects each parallel line of said electrochromic layer at only one intersection and
each of said pixel element is arranged at a respective one of said intersections.

11. A data matrix code arrangement (200) according to any one of the preceding claims, wherein said Data Matrix code arrangement is a QR-code arrangement;
- said fix Data Matrix code is a fix QR code comprising a static pattern forming a first readable QR code; and
- said fix Data Matrix code and said display is aligned such that the static pattern of said first QR code and said predetermine ones of said pixel elements, when switched, forms a second readable QR code, which is different from said first readable QR code.

12. A method of manufacturing a Data Matrix code arrangement comprising performing the following steps in an arbitrary order:
- printing a display, comprising pixel elements:
- for each pixel element:
- printing a counter electrode layer on a substrate wherein said counter electrode layer comprises electronically conductive material;
- printing an electrolyte layer on said counter electrode;
- printing an electrochromic layer on said electrolyte layer, wherein said electrochromic layer is switchable between at least two different coloring states, said electrochromic layer preferably comprises an electrically conductive and electrochemically active organic polymer material, such as an EDOT based polymer e.g. PEDOT:PSS; and
wherein said electrolyte layer ionically connects said electrochromic layer to said counter electrode layer;
- providing control means arranged for applying a predetermined potential difference across predetermined ones of said pixel elements;
- printing a fix Data Matrix code comprising a static pattern forming a first readable Data Matrix code,
- aligning said fix Data Matrix code and the display such that the static pattern of said first Data Matrix code and said predetermined ones of said pixel elements, when switched, forms a second readable Data Matrix code, which is different from said first readable Data Matrix code.

13. A method of manufacturing a Data Matrix code arrangement according to claim 12, wherein said step of aligning said fix Data Matrix code and the display is performed at the printing of the last one of said fix Data Matrix code and the display.

14. A method of manufacturing a Data Matrix code arrangement according to any one of claims 12 to 13, wherein said step of printing said counter electrode layer comprises performing the following steps in an arbitrary order:
- providing an insulating layer comprising one passage for each of said predetermined ones of said pixel elements,
- providing a conductor in said passages of said insulating layer;
- providing said conductors and the counter electrodes of said predetermined ones of said pixel elements in electronic contact with each other;
- arranging the electrode layer of each pixel element electronically separated from each other,
wherein said step of printing the electrolyte layer optionally comprises printing the electrolyte layers of said predetermined ones of said pixel elements as one continuous layer; and
wherein said step of printing the electrochromic layer optionally comprises printing the electrochromic layers of said predetermined ones of said pixel elements as one continuous layer.

15. A method of manufacturing a Data Matrix code arrangement according to any one of claims 12 to 14, wherein said printing is performed by means of low-cost printing.

16. A method of manufacturing a Data Matrix code arrangement according to claim 15, wherein said step of low-cost printing said electrode layer comprises printing parallel lines, which extend in a first direction, wherein each of said lines electronically connects a respective portion of the electrolyte layers of said predetermined ones of said pixel elements,
- wherein said step of low-cost printing the electrolyte layer comprises printing the electrolyte layers of said predetermined ones of said pixel elements such that they are ionically isolated from each other,
- wherein said step of low-cost printing said electrochromic layer comprises printing parallel lines, which extend in a second direction, wherein each of said lines electronically connects a respective portion of the electrochromic layers of said predetermined ones of said pixel elements,
- wherein each parallel line of said electrode layer intersects each parallel line of said electrochromic layer at only one intersection and each of said pixel element is arranged at a respective one of said intersections.
